# EUROPEAN PATENT SPECIFICATION

(11) **EP 2 754 355 B1**
(45) Date of publication and mention of the grant of the patent: **11.03.2020**
(21) Application number: 13150995.2
(22) Date of filing: 11.01.2013
(51) Int. Cl.: A23L 5/10, A47J 27/04, A21B 3/04, F24C 15/32

(54) **Steam cooking method and steam cooking oven**
Dampfkochverfahren und Dampfkochofen
Procédé de cuisson à la vapeur et four de cuisson à la vapeur

(43) Date of publication of application: 16.07.2014
(73) Proprietor: Electrolux Home Products Corporation N.V., 1130 Brussels (BE)
(72) Inventor: Faraldi, Paolo, 47122 Forli (IT); Furlanetto, Riccardo, 33170 Pordenone (IT); Hessenauer, Evi, 47122 Forli (DE); Bozzato, Arianna, 33170 Pordenone (IT); Turek, Richard, 91541 Rothenburg ob der Tauber (DE)
(74) Representative: Electrolux Group Patents

(56) References cited:
- EP-A1- 2 363 048
- EP-A1- 2 537 418
- WO-A1-00/64284
- DE-A1- 2 541 374
- US-A1- 2007 221 070

## Description

The present invention relates to a steam cooking method and a steam cooking oven.

Sous Vide cooking is a well established technique for professional cooks, that is growing in popularity and application also for the private households. Sous vide is French for "under vacuum" and describes a method of cooking in vacuum sealed plastic pouches at low temperatures for long times. Vacuum can be described more precisely as low pressure with some remaining air or gaseous atmosphere having a lower pressure than the normal atmospheric pressure. With the proper equipment and some basic knowledge, anyone can prepare consistently delicious and safe food.

Vacuum packaging prevents evaporative losses of flavor volatiles and moisture during cooking and inhibits off-flavors from oxidation: This results in especially flavorful and nutritious food. Vacuum sealing also reduces aerobic bacterial growth and allows for the efficient transfer of thermal energy from the water or steam to the food.

Sous vide typically consists of three stages: preparing for packaging, cooking and finishing. In almost all cases, the cooking medium is either a water bath or a convection steam oven. Standard household steam ovens do not heat uniformly enough to apply Sous Vide technique.

The document EP2537418A1 discloses a method for steam cooking.

The document DE2541374A1 discloses a cooking method and appliance.

The document US2007/0221070A1 discloses a cooker and cooking method.

The document EP 2 363 048 B1 describes a steam oven for cooking food placed in a vacuumized and sealed pouch and comprising a user interface and an electronic control unit, wherein said steam oven carries out a defined heating process on the basis of a food category and a predetermined reduction of food pathogens. However, this document does not disclose the design of a steam oven that is able to provide steam cooking conditions that are sufficient for reliable, repeatable and safe sous vide cooking. Further, it is not described which heating means or which operation of heating means has to be used to achieve such a defined heating process.

The use of steam cooking ovens is preferable over water baths, due to energy saving effects and a larger operating volume.

It is an object of the present invention to provide a steam cooking oven that enables reliable and repeatable sous vide cooking as well as safe sous vide cooking conditions.

It is a further object of the present invention to provide a steam cooking method for sous vide cooking by means of which a steam cooking oven can be operated such that reliable and repeatable sous vide cooking conditions are produced, wherein at the same time the steam cooking method makes the use of sous vide cooking more simple for the user.

The above objects of the invention are achieved by a steam cooking method according to claim 1 and a steam cooking oven according to claim 5.

A steam cooking method for operating a steam cooking oven according to claim 1 comprises at least the following steps:
- placing vacuum packed food stuff in an oven cavity;
- a heating step comprising heating up the oven cavity until the oven cavity centre has reached a defined temperature by operating a steam generator and supplying steam generated by the steam generator into said oven cavity, wherein a convection fan is operated within the oven cavity;
- a maintaining step comprising maintaining said oven cavity at said defined temperature of the oven cavity centre by operating said steam generator and supplying steam generated by the steam generator into said oven cavity over a certain period of time, wherein a convection regime in the oven cavity center is maintained, while said defined temperature of the oven cavity centre is not allowed to vary about more than +/-1,5°C;
- wherein at least during said heating step and said maintaining step the actual temperature of the oven cavity centre is determined by a control unit of the steam cooking oven by means of an algorithm that is based on the temperature values measured by a temperature sensor within the oven cavity and wherein said actual temperature is used to operate the steam generator such, that said defined temperature of the oven cavity centre is reached or maintained.

Such a method enables to heat up the oven cavity centre to a defined temperature, wherein a temperature overshot for more than 2°C over the target temperature does not occur. For this purpose the operation of the steam generator is stopped or reduced early enough depending on the detected temperature of the oven cavity centre. It is further advantageously possible to maintain a convection regime in a defined region of the oven cavity with respect to the temperature in the oven centre within an acceptable temperature range.

In an advantageous embodiment of the inventive method said exhausting step is provided for exhausting the steam from inside of the oven cavity, in particular such that said exhausting step comprises that heating elements different from the steam generator are operated to deliver a defined amount of heat to said oven cavity, such that the oven cavity air or a mixture of oven cavity air and steam being in the oven cavity expand within said oven cavity, in particular such that exhausting of the steam from inside of the oven cavity is promoted.

Thus, an increased exhaust flow of steam can be produced which quickens the reduction of saturation within the oven cavity. This results in a quickly reduced heat transfer to the food stuff due to less condensation on the food stuff. Therefore, a slow stop of the cooking process is reached, reducing the risk of overcooking and temperature overshot in the food stuff.

In a further advantageous embodiment of the invention, the inventive method is carried out such, that
- an exhaust outlet provides a passage for exhausting steam, that is closed or reduced to a substantially small, in particular to the minimum possible, passage during said heating step;
- said exhaust outlet provides said passage for exhausting steam closed or reduced to a substantially small, in particular to the minimum possible, passage during said maintaining step;
- said exhaust outlet provides said passage for exhausting steam fully opened or substantially wide, in particular as the maximum possible passage;
- in particular that said exhaust outlet is operated by means of a control unit of said steam cooking oven;

Thus, the steam exhaust during the heating step and the maintaining step is reduced and the saturation in the oven cavity can be quickened, upon need. Further, during the exhaust step, the desteaming can also be quickened, leading to a quick reduction of saturation, also when needed.

In a further embodiment of the invention said inventive method further comprises an exhausting step, wherein said exhausting step is carried out not longer than 3 minutes and/or wherein said defined temperature of the oven cavity centre is not allowed to vary about more than +/- 3°C during said exhausting step.

This results in an advantageous slow and precise stop of the condensation on the food stuff, while the temperature of the oven cavity centre can be operated very precise. Thus, the cooking result is advantageously good.

The above described problems are also advantageously solved by a steam cooking oven according to claim 5.

Such a steam cooking oven, in particular for sous vide cooking processes, comprises:
- an oven cavity for placing vacuum packed food stuff in defined positions therein;
- at least one steam generator for supplying steam into said oven cavity;
- at least one convection fan arranged at or inside of said oven cavity for generating a gas flow within said oven cavity, wherein said gas flow is generated so that said convection fan sucks oven cavity air or a mixture of oven cavity air and steam from at least one first direction and blows said oven cavity air or said mixture of oven cavity air and steam in one or more second directions different from said first direction;
wherein:
- said steam supplied from said steam generator and said gas flow generate a defined flow pattern inside of said oven cavity at least in the defined positions where said food stuff can be placed;
- wherein said steam supplied from said steam generator is continuously stirred into said gas flow, in such way that said flow pattern creates a homogenous convection regime around said food stuff;
- wherein the rotation direction is varied to improve steam stirring and even distribution;
- wherein a flow-type steam generator is arranged outside of the oven cavity, wherein the flow-type steam generator is connected with the oven cavity via an outlet that comprises a nozzle with a diffusion element, wherein by means of the diffusion element, the steam let out of the outlet is evenly distributed over a relatively wide volume and can be absorbed by the gas flow passing by;
- wherein said oven cavity comprises at least one variable section exhaust outlet having a variable exhaust passage, wherein the exhaust passage can be reduced to 50 % of its maximum passage;
- wherein a temperature sensor is provided in an upper region of the oven cavity to monitor the oven cavity temperature;
- wherein an electronic control system, executing a closed loop temperature control, is acquiring a signal from the temperature sensor and from a needle probe, if provided, and is controlling the steam generator, one or more heating elements and the variable section exhaust outlet, to execute a multi-phase cooking cycle, changing behaviour for each cycle according to set parameters.

Thus, a steam cooking oven is provided in which the food stuff is evenly heated by condensation of steam or vapour, respectively, wherein no additional heating, e.g. by resistive heating elements is required. A uniform and even convection regime is created around the food stuff to be cooked ensuring the correct desired cooking result. A homogenous convection regime shall be understood as a continuous and homogeneous forced convection flow avoiding or limiting a flow directly hitting the food stuff. A continuous convection regime around the vacuumed food stuff avoids local depletions of air humidity, due to possible calm air zones, efficiently providing steam saturation around the pouch of the food stuff all over the cooking process.

Said steam generator supplies said steam to the oven cavity via an outlet. In a further advantageous embodiment of the invention said steam generator is adapted to the oven cavity such, that the ratio of generator power to cavity volume is equal or more than 16 Watt/litre. In a further advantageous embodiment of the invention said steam generator enables said steam cooking oven to reach approximately 100 % humidity within said oven cavity at a temperature below 100°C within 250 s or faster.

A steam generator of this size enables a fast supply of steam into the oven cavity. Thus, enough steam can be released into the oven cavity to guarantee, that the food is mainly heated up by steam or vapour condensation. Further, the steam generation is, thus, quick enough to reach a temperature set point and saturation of 100 % humidity in the oven cavity in a very short time. The temperature increase of the food stuff begins most advantageously as soon as saturation is reached. E.g. it is advantageous, if 100 % humidity is reached within 250 s for a temperature set point of 96°C and is substantially kept over the complete cooking cycle. Such condition can be achieved by means of the inventive embodiment. Further, a steam outlet within the oven cavity is advantageously carefully controlled. Due to the quick heating rate, hot spots, e.g. steam jets, which lead to inhomogeneous temperature fields in the food and potentially damage the pouches could occur. However, this is prevented by means of the above defined flow pattern in combination with a such dimensioned and designed steam generator and outlet.

Said steam generator is arranged outside of the oven cavity, being a flow-type steam generator, wherein said outlet is a nozzle, said outlet comprising a diffuser element.

Also with a nozzle, and in particular with a diffuser element, a slow speed outlet can be achieved. A nozzle of a flow-type steam generator has the further advantage, that it can be arranged in the oven cavity or on the cavity walls were it is most favourable for stirring steam into the gas flow.

In a further advantageous embodiment of the invention, said convection fan is operated such, that said gas flow is a laminar gas flow at least in the region where said gas flow passes said outlet, in particular continuously stirring the steam into the gas flow.

By means of a laminar gas flow passing the outlet, the absorption or collection of the steam into the gas flow is very effective. In combination with a bowl-shaped generator a laminar gas flow can be even more effective.

In a further advantageous embodiment of the invention, said convection fan is operated such, that said gas flow is a turbulent gas flow at least in the region where said gas flow passes said outlet, in particular continuously stirring the steam into the gas flow.

E.g. in combination with a nozzle a turbulent gas flow might be very effective to absorb or collect the steam into the gas flow. It is possible, that the convection fan can be operated such, that a laminar gas flow and a turbulent gas flow are generated, e.g. alternately.

In a further advantageous embodiment of the invention, said convection fan is arranged adjacent to a rear wall of said oven cavity, wherein a fan shield is arranged between the convection fan and the oven cavity, wherein said arrangement of the convection fan and the fan shield guides said gas flow past the outlet of said steam generator.

Thus, the supplied steam can be immediately stirred to the gas flow contributing to an ideal steam distribution. Variations in the gas flow can be minimized in such way.

According to a further advantageous embodiment of the invention, one or more heating elements are provided which can be operated such, that the heat supplied by said heating elements is less than 10 % of the overall heat supplied to the oven cavity.

It has to be understood, that the heating elements can be all heating elements of the steam cooking oven different from the heating element of the steam generator. Thus, additional heat can be delivered to the oven cavity for regulating the temperature of the oven cavity centre without negatively affecting the even distribution of the steam in the oven cavity and the gas flow. Therefore, it is enabled to slightly operate the oven cavity temperature and in particular the oven cavity centre temperature.

According to a further advantageous embodiment of the invention at least one temperature sensor is provided in the oven cavity, and said steam cooking oven comprises a control unit which is adapted to carry out at least one algorithm by means of which the temperature in a central region of the oven cavity can be determined on the basis of the value measured by said temperature sensor, in particular wherein said control unit can control at least said steam generator and said convection fan.

Thus, the convection regime around the food stuff in the oven cavity centre can be controlled, operated and regulated in a very precise way. It is particularly advantageous to be able to determine the temperature of the oven cavity centre indirectly by means of an algorithm based on a temperature sensor which is, e.g. arranged on a cavity wall, because in such case it is not necessary to arrange a sensor in the cavity centre itself.

In a preferred advantageous embodiment of the invention a temperature probe is provided which is guided through a packaging of said food stuff and which is in direct contact to said food stuff, said temperature probe measuring the temperature of said food stuff.

Thus, an additional measurement, e.g. of the core temperature of the food stuff, is provided which improves the control and regulation of the temperature of the oven cavity or of the oven cavity centre temperature.

Said oven cavity comprises at least one exhaust outlet having a variable exhaust passage, in particular wherein the exhaust passage can be reduced to 50 % of its maximum passage, said exhaust outlet being controlled by said control unit.

Thus, a reduced outflow of steam out of the oven cavity can be provided and the heating up of the cavity by steam saturation can be quickened. Further, such a variable exhaust outlet enables the steam cooking oven to run conventional cooking modes, such as hot air modes or conventional convection cooking modes.

All described embodiments of the invention have the advantage, that sous vide cooking can be carried out manually or by using pre-set recipes. Manual setting and recipes can be provided in a memory unit connected or part of the control unit.

The present invention will be described in further detail with reference to the drawings, in which
- FIG 1: illustrates a side sectional view of a steam cooking oven showing a first inventive embodiment;
- FIG 2: illustrates a side sectional view of a steam cooking oven showing a second inventive embodiment;

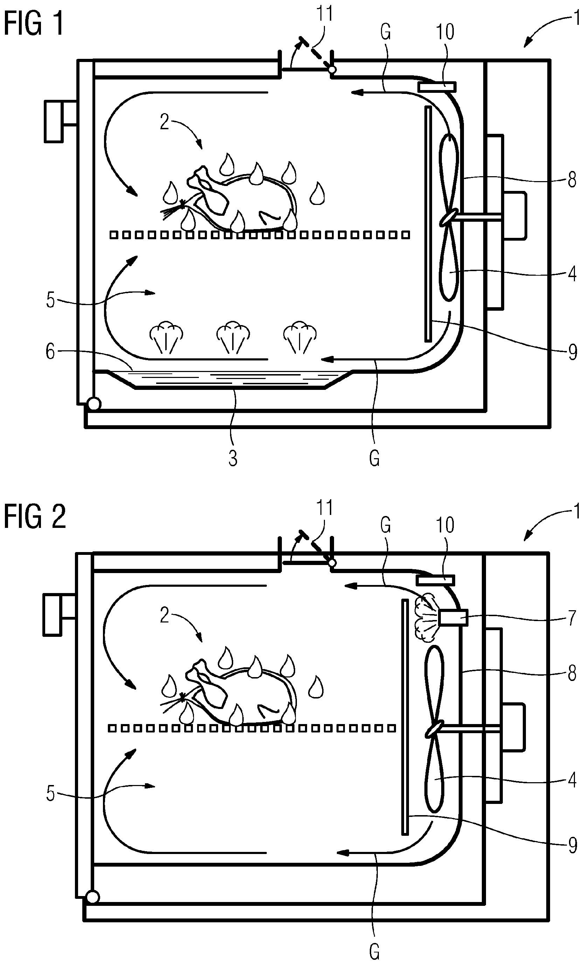

FIG 1 shows a steam cooking oven 1 comprising an oven cavity 5 which is closed by a front door. Food stuff 2 which is packed in a plastic pouch, is placed in a central region of the oven cavity 5. Usually oven cavities comprise means for positioning food stuff in different defined vertical positions, such as guiding rails or lateral embosses.

The oven cavity 5 comprises several cavity walls such as a rear wall 8. A convection fan 4 is arranged adjacent to the rear wall 8 in the oven cavity 5 and is covered by a fan shield 9 that guides a gas flow G generated by the convection fan 4 in defined directions.

A bowl-shaped liquid container of the steam generator 3 is formed to a bottom wall of the oven cavity 5. The liquid container of the steam generator 3 can be filled with a liquid, e.g. water, which can be evaporated by means of a heating element provided by the steam generator 3. An outlet 6 is formed by the liquid container which allows the evaporated steam to reach a central region of the oven cavity 5.

The gas flow G generated by the convection fan 4 is guided by the fan shield 9 such, that it passes the outlet 6 of the steam generator 3. The convection fan is of a centrifugal type, wherein the fan intake arranged in the fan shield 9 is placed substantially at mid height of the rear wall 8. The convection fan position and fan shield design and position and the resulting flow pattern shall be positioned with respect to the outlet 6, 7 of the steam generators so that ingoing steam is immediately intercepted and stirred or mixed to the air.

The convection fan 4 can be controlled and operated such, that a fan operation is ensured over the complete cooking cycle with a fan speed sufficient to allow a most effective mixing of steam into the gas flow G. The fan rotation speed or the rotation direction can be varied to further improve steam stirring and even distribution.

The gas flow 6 that passes by the outlet 6 absorbs or collects steam which leaving the steam generator 3. In this way, the steam is stirred to the gas flow G without disturbing the even distribution of the previously supplied steam in the oven cavity 5.

A large surface of the outlet 6 is created which allows a relatively large amount of steam to enter the oven cavity with a relatively slow flow speed. Thus, the convective conditions, i.e. the convection regime, in the central region of the oven cavity 5 are not disturbed by the steam supply and it is possible to maintain a stable homogenous convection in the central region of the oven cavity 5.

FIG 2 shows a steam cooking oven 1 like in FIG 1. However, the steam cooking oven 1 comprises no bowl-shaped steam generator, but a flow-type steam generator (not shown) that is arranged outside of the oven cavity 5. The flow-type steam generator is connected with the oven cavity 5 via an outlet 7 that comprises a nozzle with a diffusion element. By means of the diffusion element, the steam let out of the outlet 7 is evenly distributed over a relatively wide volume and can be absorbed or collected by the gas flow G passing by.

A temperature sensor 10 is provided in both embodiments in an upper rear region of the oven cavity 5 to monitor the oven cavity temperature. An algorithm is provided to evaluate the temperature of the oven cavity centre on the basis of the temperature detected by the temperature sensor 10. The oven cavity centre temperature is controlled on the basis of the information given from the temperature sensor 10 to a control unit.

Advantageously, a food probe, e.g. a needle temperature probe, can be inserted into the food stuff through the pouch and can be provided to determine the temperature of the food stuff directly. To prevent gas or liquid from entering the punctured bag, the food probe can be inserted through, e.g. closed cell foam tape, capable to self repair the punctured pouch.

A variable section exhaust, exhaust section reduction at least 50%, named exhaust outlet 11, is provided to ensure a reduced outflow from the oven cavity 5 and speed up cavity steam saturation when needed. This feature allows the oven to run conventional cooking modes, along with Sous Vide cooking cycles. An electronic control system, capable to execute a closed loop temperature control, acquiring the signal from the temperature sensor 10 and from the needle probe, if provided, and controlling the steam generator 3, the heating elements, the variable section exhaust outlet 11, to execute a multi- phase cooking cycle, changing behaviour for each cycle according to set parameters.

To execute a sous Vide cooking technique, an oven control needs to run a cycle being composed at least by the following three phases:

### - Heating:

The electronic control set the exhaust section of the exhaust outlet 11 to the minimum value, activates the cooking fan, i.e. convection fan 4, and switches on the steam generator 3 to maximum power. Also, some support to the heating process can be achieved by partial activation of other heating elements (less than 10% of overall heat supply). Temperature target shall be reached with no or minimum overshoot (< 2 °C) for oven centre temperature: to achieve this target, as previously mentioned, the position of the cavity temperature sensor 10 must be chosen according to the steam generator position to avoid direct steam flow on the sensor and to fan position to avoid excess of convection heat transfer on the sensor. An evaluation algorithm must be the applied, to estimate temperature in oven center cavity with high precision.

### - Maintenance:

The electronic control keeps set the exhaust section to the minimum value, the cooking fan activated, and controls the heat input in the cavity (hence to the food) by controlling the activation of the steam generator (by a time based variable duty cycle or by modulating the power output). The maximum ripple of oven center temperature shall be within +/-1,5 °C around the set point, with an offset between the average observed temperature and the set point < 1 °C. This variation is effectively averaged by the insulation effect given by the plastic bag, resulting in a variation in the food reduced enough to guarantee excellent results.

### - Desteaming:

The electronic control opens the exhaust section of the exhaust outlet 11 to the maximum value, keeps the cooking convection fan 4 activated, and delivers a minimum amount of heat by resistive heating elements: this results in a slight expansion of air in the oven cavity 5. This results in an increased exhaust flow that promotes steam excess evacuation. Prompt reduction of cavity saturation results also in a reduced heat transfer to food, due to less condensation happening on food: this is important to actually slow down cooking process, reducing the risk of overcooking and temperature overshot in the food. This phase duration must be <3 minutes and the maximum ripple in oven centre temperature control during this phase shall not exceed +/-3 °C.

Under the point of view of cycle setup to fit different foodstuff, the two parameters to set are:
- Time (cycle duration)
- Temperature (oven center temperature during maintenance phase)

The user has the chance to drive the Sous Vide cooking mode either manually or using pre-set recipes.
- Manual setting: a Sous Vide cooking function is provided in the navigation tree; the user selects such function and it is asked to input time and temperature to launch the cooking process.
- Pre-set recipes: for a set of predefined recipes (preparation, ingredients type and quantity, etc.) time and temperature setting are pre-set; the user can browse these recipes in the user interface navigation tree, and, by selecting one of these, starts the Sous Vide cooking function with pre-set time and temperature for chosen recipe.

### List of reference numerals

- 1: steam cooking oven
- 2: food stuff
- 3: steam generator
- 4: convection fan
- 5: oven cavity
- 6: outlet
- 7: outlet
- 8: rear wall
- 9: fan shield
- 10: temperature sensor
- 11: exhaust outlet

- G: gas flow
- T_{d}: defined temperature of oven cavity centre
- Tₐ: actual temperature of oven cavity centre
- R: ratio = generator power / cavity volume

## Claims

1. Steam cooking method for operating a steam cooking oven (1) comprising at least the following steps:
- placing vacuum packed food stuff (2) in an oven cavity (5);
- a heating step comprising heating up the oven cavity (5) until the oven cavity centre has reached a defined temperature (T_{d}) by operating a steam generator (3) and supplying steam generated by the steam generator (3) into said oven cavity (5), wherein a convection fan (4) is operated within the oven cavity (5);
- a maintaining step comprising maintaining said oven cavity (5) at said defined temperature (T_{d}) of the oven cavity centre by operating said steam generator (3) and supplying steam generated by the steam generator (3) into said oven cavity (5) over a certain period of time, wherein a convection regime in the oven cavity center is maintained, while said defined temperature (T_{d}) of the oven cavity centre is not allowed to vary about more than +/- 1,5°C;
- wherein at least during said heating step and said maintaining step the actual temperature (Tₐ) of the oven cavity centre is determined by a control unit of the steam cooking oven (2) by means of an algorithm that is based on the temperature values measured by a temperature sensor within the oven cavity (5) and wherein said actual temperature (Tₐ) is used to operate the steam generator such, that said defined temperature ((T_{d}) of the oven cavity centre is reached or maintained.

2. Steam cooking method according to claim 1, **characterized in that** said an exhausting step is provided for exhausting the steam from inside of the oven cavity, in particular such that said exhausting step comprises that heating elements different from the steam generator are operated to deliver a defined amount of heat to said oven cavity (5), such that the oven cavity air or a mixture of oven cavity air and steam being in the oven cavity (5) expand within said oven cavity (5), in particular such that exhausting of the steam from inside of the oven cavity is promoted.

3. Steam cooking method according to claim 1 or 2, **characterized in that**
- an exhaust outlet provides a passage for exhausting steam, that is closed or reduced to a substantially small, in particular to the minimum possible, passage during said heating step;
- said exhaust outlet provides said passage for exhausting steam closed or reduced to a substantially small, in particular to the minimum possible, passage during said maintaining step;
- said exhaust outlet provides said passage for exhausting steam fully opened or substantially wide, in particular as the maximum possible passage;
- in particular that said exhaust outlet is operated by means of a control unit of said steam cooking oven.

4. Steam cooking method according to one of the claims 1 to 3, **characterized in that** said method further comprises an exhausting step, wherein said exhausting step is carried out not longer than 3 minutes and/or wherein said defined temperature (T_{d}) of the oven cavity centre is not allowed to vary about more than +/- 3°C during said exhausting step.

5. Steam cooking oven (1) for sous vide cooking processes, comprising:
- an oven cavity (5) for placing vacuum packed food stuff (2) in defined positions therein;
- at least one steam generator (3) for supplying steam into said oven cavity (5);
- at least one convection fan (4) arranged at or inside of said oven cavity (5) for generating a gas flow (G) within said oven cavity (5), wherein said gas flow (G) is generated so that said convection fan (4) sucks oven cavity air or a mixture of oven cavity air and steam from at least one first direction and blows said oven cavity air or said mixture of oven cavity air and steam in one or more second directions different from said first direction;
wherein said steam generator (3) and said convection fan (4) are arranged such that
a) said steam supplied from said steam generator (3) and said gas flow (G) generated by said convection fan (4) generate a defined flow pattern inside of said oven cavity (5) at least in the defined positions where said food stuff (2) can be placed; and
b) said steam supplied from said steam generator (3) is continuously stirred into said gas flow (G), in such way that said flow pattern creates a homogenous convection regime around said food stuff (2),
wherein the rotation direction is varied to improve steam stirring and even distribution,
wherein a flow-type steam generator is arranged outside of the oven cavity (5), wherein the flow-type steam generator is connected with the oven cavity (5) via an outlet (7) that comprises a nozzle with a diffusion element, wherein by means of the diffusion element, the steam let out of the outlet (7) is evenly distributed over a relatively wide volume and can be absorbed by the gas flow (G) passing by,
wherein said oven cavity (5) comprises at least one variable section exhaust outlet (11) having a variable exhaust passage, wherein the exhaust passage can be reduced to 50 % of its maximum passage,
wherein a temperature sensor (10) is provided in an upper region of the oven cavity (5) to monitor the oven cavity temperature,
wherein an electronic control system, executing a closed loop temperature control, is acquiring a signal from the temperature sensor (10) and from a needle probe, if provided, and is controlling the steam generator (3), one or more heating elements and the variable section exhaust outlet (11), to execute a multi-phase cooking cycle, changing behaviour for each cycle according to set parameters.

6. Steam cooking oven (1) according to claim 5, **characterized in that** said convection fan (4) is arranged adjacent to a rear wall (8) of said oven cavity (5), wherein a fan shield (9) is arranged between the convection fan (4) and the oven cavity (5), wherein said arrangement of the convection fan (4) and the fan shield (9) guides said gas flow (G) past the outlet (6, 7) of said steam generator (3).

7. Steam cooking oven (1) according to one of the claims 5 to 6, **characterized in that** a temperature probe is provided which is guided through a packaging of said food stuff (2) and which is in direct contact to said food stuff (2), said temperature probe measuring the temperature of said food stuff (2) .

## Patentansprüche

1. Dampfgarverfahren zum Betreiben eines Dampfgarofens (1), wobei das Verfahren wenigstens die folgenden Schritte umfasst:
- Anordnen von vakuumverpackten Lebensmitteln (2) in einem Ofenhohlraum (5)
- einen Heizschritt, der ein Aufheizen des Ofenhohlraums (5) umfasst, bis die Mitte des Ofenhohlraums durch Betreiben eines Dampfgenerators (3) und durch Zuführen von Dampf, der durch den Dampfgenerator (3) erzeugt wurde, in den Ofenhohlraum (5) eine definierte Temperatur (T_{d}) erreicht hat, wobei ein Umluftgebläse (4) in dem Ofenhohlraum (5) betrieben wird;
- einen Halteschritt, der das Halten des Ofenhohlraums (5) auf der definierten Temperatur (T_{d}) der Mitte des Ofenhohlraums durch Betreiben des Dampfgenerators (3) und durch Zuführen von Dampf, der durch den Dampfgenerator (3) erzeugt wurde, in den Ofenhohlraum (5) über einen bestimmten Zeitraum umfasst, wobei ein Umluftzustand in der Mitte des Ofenhohlraums aufrechterhalten wird, wobei verhindert wird, dass sich die definierte Temperatur (T_{d}) der Mitte des Ofenhohlraums um mehr als ± 1,5 °C ändert;
- wobei wenigstens während des Heizschritts und des Halteschritts die tatsächliche Temperatur (Tₐ) der Mitte des Ofenhohlraums durch eine Steuereinheit des Dampfgarofens (2) mittels eines Algorithmus bestimmt wird, der auf den Temperaturwerten beruht, die durch einen Temperatursensor in dem Ofenhohlraum (5) gemessen werden, und wobei die tatsächliche Temperatur (Tₐ) verwendet wird, um den Dampfgenerator so zu betreiben, dass die definierte Temperatur (T_{d}) der Mitte des Ofenhohlraums erreicht oder beibehalten wird.

2. Dampfgarverfahren nach Anspruch 1, **dadurch gekennzeichnet, dass** ein Abführschritt zum Abführen des Dampfs von dem Innenraum des Ofenhohlraums insbesondere so vorgesehen ist, dass der Abführschritt umfasst, dass Heizelemente, die sich von dem Dampfgenerator unterscheiden, betrieben werden, um dem Ofenhohlraum (5) eine definierte Wärmemenge zuzuführen, so dass sich die Luft des Ofenhohlraums oder eine Mischung von Luft des Ofenhohlraums und von Dampf, der sich in dem Ofenhohlraum (5) befindet, in dem Ofenhohlraum (5) insbesondere so ausdehnt, dass das Abführen des Dampfes aus dem Innenraum des Ofenhohlraums unterstützt wird.

3. Dampfgarverfahren nach Anspruch 1 oder 2, **dadurch gekennzeichnet, dass**:
- ein Abluftauslass einen Durchlass zum Abführen von Dampf bereitstellt, der während des Heizschritts geschlossen oder auf einen im Wesentlichen kleinen, insbesondere auf den minimal möglichen Durchlass verringert wird;
- der Abluftauslass den Durchlass zum Abführen von Dampf bereitstellt, der während des Halteschritts geschlossen oder auf einen im Wesentlichen kleinen, insbesondere auf den minimal möglichen Durchlass verringert wird;
- der Abluftauslass einen Durchlass zum Abführen von Dampf, der vollständig geöffnet oder im Wesentlichen breit ist, insbesondere als den maximal möglichen Durchlass bereitstellt;
- insbesondere der Abluftauslass mittels einer Steuereinheit des Dampfgarofens betrieben wird.

4. Dampfgarverfahren nach einem der Ansprüche 1 bis 3, **dadurch gekennzeichnet, dass** das Verfahren ferner einen Abführschritt umfasst, wobei der Abführschritt nicht länger als 3 Minuten ausgeführt wird und/oder wobei verhindert wird, dass sich die definierte Temperatur (T_{d}) der Mitte des Ofenhohlraums während des Abführschritts um mehr als ± 3 °C ändert.

5. Dampfgarofen (1) für Sous-Vide-Garprozesse, der Folgendes umfasst:
- einen Ofenhohlraum (5) zum Anordnen von vakuumverpackten Lebensmitteln (2) an definierten Positionen;
- wenigstens einen Dampfgenerator (3) zum Zuführen von Dampf in den Ofenhohlraum (5);
- wenigstens ein Umluftgebläse (4), das an oder in dem Ofenhohlraum (5) angeordnet ist, um eine Gasströmung (G) in dem Ofenhohlraum (5) zu erzeugen, wobei die Gasströmung (5) so erzeugt wird, dass das Umluftgebläse (4) Luft des Ofenhohlraums oder eine Mischung von Luft des Ofenhohlraums und von Dampf aus wenigstens einer ersten Richtung ansaugt und die Luft des Ofenhohlraums oder die Mischung von Luft des Ofenhohlraums und von Dampf in einer oder mehreren zweiten Richtungen, die sich von der ersten Richtung unterscheiden, ausbläst;
wobei der Dampfgenerator (3) und das Umluftgebläse (4) so angeordnet sind, dass
a) der Dampf, der von dem Dampfgenerator (3) zugeführt wird, und die Gasströmung (G), die durch das Umluftgebläse (4) erzeugt wird, ein definiertes Strömungsmuster in dem Ofenhohlraum (5) wenigstens bei den definierten Positionen erzeugen, bei denen die Lebensmittel (2) angeordnet werden können; und
b) der Dampf, der von dem Dampfgenerator (3) zugeführt wird, kontinuierlich in die Gasströmung (G) gemischt wird, so dass das Strömungsmuster einen homogenen Umluftzustand um die Lebensmittel (2) erzeugt,
wobei die Drehrichtung verändert wird, um das Mischen des Dampfs und eine gleichmäßige Verteilung zu verbessern,
wobei ein Dampfströmungsgenerator außerhalb des Ofenhohlraums (5) angeordnet ist, wobei der Dampfströmungsgenerator mit dem Ofenhohlraum (5) über einen Auslass (7) verbunden ist, der eine Düse mit einem Diffusionselement umfasst, wobei mittels des Diffusionselements der Dampf, der aus dem Auslass (7) ausgelassen wird, über ein relativ breites Volumen gleichmäßig verteilt wird und durch die Gasströmung (G), die vorbeigelangt, absorbiert werden kann,
wobei der Ofenhohlraum (5) wenigstes einen Abluftauslass (11) mit veränderbarem Querschnitt umfasst, der einen veränderbaren Abluftdurchlass aufweist, wobei der Abluftdurchlass auf 50 % seines maximalen Durchlasses verringert werden kann,
wobei ein Temperatursensor (10) in einem oberen Bereich des Ofenhohlraums (5) vorgesehen ist, um die Temperatur des Ofenhohlraums zu überwachen,
wobei ein elektronisches Steuersystem, das eine Temperaturregelung ausführt, ein Signal von dem Temperatursensor (10) und von einer Nadelsonde, falls diese vorgesehen ist, erfasst, und den Dampfgenerator (3), ein oder mehrere Heizelemente und den Abluftauslass (11) mit veränderbarem Querschnitt steuert, um einen mehrphasigen Garzyklus auszuführen, wobei das Verhalten für jeden Zyklus in Übereinstimmung mit eingestellten Parametern geändert wird.

6. Dampfgarofen (1) nach Anspruch 5, **dadurch gekennzeichnet, dass** das Umluftgebläse (4) angrenzend an eine Rückwand (8) des Ofenhohlraums (5) angeordnet ist, wobei eine Gebläseabschirmung (9) zwischen dem Umluftgebläse (4) und dem Ofenhohlraum (5) angeordnet ist, wobei die Anordnung des Umluftgebläses (4) und der Gebläseabschirmung (9) die Gasströmung (G) über den Auslass (6, 7) des Dampfgenerators (3) leitet.

7. Dampfgarofen (1) nach einem der Ansprüche 5 bis 6, **dadurch gekennzeichnet, dass** ein Temperatursensor vorgesehen ist, der durch eine Verpackung der Lebensmittel (2) geführt wird und der mit den Lebensmitteln (2) in direktem Kontakt ist, wobei der Temperatursensor die Temperatur der Lebensmittel (2) misst.

## Revendications

1. Procédé de cuisson à la vapeur permettant d'actionner un four de cuisson à la vapeur (1), comprenant au moins les étapes suivantes :
- le fait de placer des aliments emballés sous vide (2) dans une cavité de four (5) ;
- une étape de chauffage comprenant le chauffage de la cavité de four (5) jusqu'à ce que le centre de la cavité de four ait atteint une température définie (T_{d}) en actionnant un générateur de vapeur (3) et en fournissant la vapeur générée par le générateur de vapeur (3) dans ladite cavité de four (5), un ventilateur de convection (4) étant actionné à l'intérieur de la cavité de four (5) ;
- une étape de maintien comprenant le maintien de ladite cavité de four (5) à la température définie (T_{d}) du centre de la cavité de four en actionnant ledit générateur de vapeur (3) et en fournissant la vapeur générée par le générateur de vapeur (3) dans ladite cavité de four (5) pendant une certaine période de temps, dans lequel un régime de convection au centre de la cavité de four est maintenu pendant que ladite température définie (T_{d}) du centre de la cavité de four ne doit pas varier de plus d'environ ±1,5 °C ;
- dans lequel, au moins pendant ladite étape de chauffage et ladite étape de maintien, la température réelle (Tₐ) du centre de la cavité de four est déterminée par une unité de commande du four de cuisson à la vapeur (2) au moyen d'un algorithme qui est basé sur les valeurs de température mesurées par un capteur de température à l'intérieur de la cavité de four (5), et ladite température réelle (Tₐ) étant utilisée pour actionner le générateur de vapeur de telle sorte que ladite température définie (T_{d}) du centre de la cavité de four soit atteinte ou maintenue.

2. Procédé de cuisson à la vapeur selon la revendication 1, **caractérisé en ce qu'**une étape d'évacuation est prévue pour évacuer la vapeur de l'intérieur de la cavité de four, en particulier de telle sorte que ladite étape d'évacuation comprend le fait que des éléments de chauffage différents du générateur de vapeur sont actionnés pour délivrer une quantité définie de chaleur à ladite cavité de four (5), de telle sorte que l'air de la cavité de four ou un mélange de l'air de la cavité de four et de la vapeur qui se trouve dans la cavité de four (5) se dilate à l'intérieur de ladite cavité de four (5), en particulier de façon à favoriser l'évacuation de la vapeur depuis l'intérieur de la cavité de four.

3. Procédé de cuisson à la vapeur selon la revendication 1 ou 2, **caractérisé en ce que**
- une sortie d'évacuation fournit un passage pour évacuer la vapeur, qui est fermé ou réduit à un passage substantiellement petit, en particulier au minimum possible pendant ladite étape de chauffage ;
- ladite sortie d'évacuation fournit ledit passage pour évacuer la vapeur fermé ou réduit à un passage substantiellement petit, en particulier au minimum possible pendant ladite étape de maintien ;
- ladite sortie d'évacuation fournit ledit passage pour évacuer la vapeur entièrement ouvert ou avec un passage substantiellement large, en particulier au maximum possible ;
- en particulier **en ce que** ladite sortie d'évacuation est actionnée au moyen d'une unité de commande dudit four de cuisson à la vapeur.

4. Procédé de cuisson à la vapeur selon l'une quelconque des revendications 1 à 3, **caractérisé en ce que** ledit procédé comprend en outre une étape d'évacuation, ladite étape d'évacuation étant effectuée pendant pas plus de 3 minutes et/ou ladite température définie (T_{d}) du centre de la cavité de four ne devant pas varier de plus d'environ ±3 °C pendant ladite étape d'évacuation.

5. Four de cuisson à la vapeur (1) destiné à des processus de cuisson sous vide, comprenant :
- une cavité de four (5) pour placer des aliments emballés sous vide (2) dans des positions définies dans celle-ci ;
- au moins un générateur de vapeur (3) pour fournir de la vapeur dans ladite cavité de four (5) ;
- au moins un ventilateur de convection (4) agencé au niveau ou à l'intérieur de ladite cavité de four (5) pour générer un écoulement de gaz (G) à l'intérieur de ladite cavité de four (5), ledit écoulement de gaz (G) étant généré de telle sorte que ledit ventilateur de convection (4) aspire l'air de la cavité de four ou un mélange d'air de la cavité de four et de vapeur depuis au moins une première direction et souffle ledit air de la cavité de four ou ledit mélange d'air de la cavité de four et de vapeur dans une ou plusieurs deuxièmes directions différentes de ladite première direction ;
dans lequel ledit générateur de vapeur (3) et ledit ventilateur de convection (4) sont agencés de telle sorte que
a) ladite vapeur fournie depuis ledit générateur de vapeur (3) et ledit écoulement de gaz (G) généré par ledit ventilateur de convection (4) génèrent une configuration d'écoulement définie à l'intérieur de ladite cavité de four (5) au moins dans les positions définies où lesdits aliments (2) peuvent être placés ; et
b) ladite vapeur fournie depuis ledit générateur de vapeur (3) est constamment agitée dans ledit écoulement de gaz (G), de telle sorte que ladite configuration d'écoulement crée un régime de convection homogène autour desdits aliments (2),
dans lequel le sens de rotation est amené à varier pour améliorer l'agitation et une distribution uniforme de la vapeur,
dans lequel un générateur de vapeur à écoulement est agencé à l'extérieur de la cavité de four (5), dans lequel le générateur de vapeur à écoulement est connecté à la cavité de four (5) par l'intermédiaire d'une sortie (7) qui comprend une buse avec un élément de diffusion, dans lequel, au moyen de l'élément de diffusion, la vapeur dégagée de la sortie (7) est distribuée uniformément sur un volume relativement large et peut être absorbée par l'écoulement de gaz (G) de passage,
dans lequel ladite cavité de four (5) comprend au moins une sortie d'évacuation à section variable (11) comportant un passage d'évacuation variable, dans lequel le passage d'évacuation peut être réduit à 50 % de son passage maximum,
dans lequel un capteur de température (10) est prévu dans une région supérieure de la cavité de four (5) pour surveiller la température de la cavité de four,
dans lequel un système de commande électronique, exécutant une régulation de température en boucle fermée acquiert un signal du capteur de température (10) et d'une sonde à aiguille, le cas échéant, et commande le générateur de vapeur (3), un ou plusieurs éléments de chauffage et la sortie à section variable (11) pour exécuter un cycle de cuisson à plusieurs phases en changeant de comportement pour chaque cycle selon des paramètres fixés.

6. Four de cuisson à la vapeur (1) selon la revendication 5, **caractérisé en ce que** ledit ventilateur de convection (4) est agencé à côté d'une paroi arrière (8) de ladite cavité de four (5), dans lequel un déflecteur de ventilateur (9) est agencé entre le ventilateur de convection (4) et la cavité de four (5), ledit agencement du ventilateur de convection (4) et du déflecteur de ventilateur (9) guidant ledit écoulement de gaz (G) devant la sortie (6, 7) dudit générateur de vapeur (3).

7. Four de cuisson à la vapeur (1) selon l'une quelconque des revendications 5 et 6, **caractérisé en ce qu'**une sonde de température est prévue qui est guidée à travers un emballage desdits aliments (2) et qui se trouve en contact direct avec lesdits aliments (2), ladite sonde de température mesurant la température desdits aliments (2).
